# EUROPÄISCHE PATENTANMELDUNG

(11) **EP 0 954 128 A2**
(43) Veröffentlichungstag der Anmeldung: **03.11.1999**
(21) Anmeldenummer: 99107997.1
(22) Anmeldetag: 22.04.1999
(51) Int. Cl.: H04B 10/207

(54) **Sternförmiges passives optisches Netzwerk**

(30) Priorität: 27.04.1998 DE 19818783
(71) Anmelder: Delphi Technologies, Inc., Troy, MI 48007 (US)
(72) Erfinder: Rucks, Michael, 58239 Schwerte (DE); Haack, Albrecht, 42369 Wuppertal (DE)
(74) Vertreter: Manitz, Finsterwald & Partner

(57) **Zusammenfassung**

Es wird ein Netzwerk zur Übertragung von insbesondere digitalen optischen Datensignalen mit mehreren die optischen Datensignale aussenden Sendern und mehreren zum Empfang der optischen Datensignal ausgebildeten Empfängern beschrieben. Das Netzwerk weist eine sternförmige Struktur auf und die Sender und Empfänger sind jeweils über Lichtleiter, insbesondere über Plastik- oder Glasfaserkabel, mit einem zentralen passiven optischen Knotenelement zum Empfangen und Weiterleiten der optischen Datensignale verbunden. In den Signalwegen zwischen zumindest einem Teil der Sender und dem Knotenelement und/oder zwischen zumindest einem Teil der Empfänger und dem Knotenelement ist jeweils eine aktive Verstärkungseinheit zum Verstärken der Lichtstärke der optischen Datensignale angeordnet.

## Beschreibung

Die vorliegende Erfindung betrifft ein Netzwerk zur Übertragung von insbesondere digitalen optischen Datensignalen mit mehreren die optischen Datensignale aussendenden Sendern und mehreren zum Empfang der optischen Datensignale ausgebildeten Empfängern, wobei das Netzwerk eine sternförmige Struktur aufweist und die Sender und Empfänger jeweils über Lichtleiter, insbesondere über Plastik- oder Glasfaserkabel, mit einem zentralen passiven optischen Knotenelement zum Empfangen und Weiterleiten der optischen Datensignale verbunden sind.

Sternförmige Netzwerke dieser Art haben gegenüber ringförmigen Netzwerkstrukturen mehrere Vorteile. Während bei einer Ringstruktur bei Unterbrechung einer Leitung üblicherweise das gesamte Netzwerk ausfällt, sind bei einer sternförmigen Struktur die übrigen Leitungen von der Unterbrechung nicht betroffen. Eine sternförmige Struktur ist wesentlich flexibler einsetzbar, da zum einen beispielsweise zusätzliche Leitungen und Module ohne Eingriff in das restliche Netzwerk hinzugefügt bzw. abgesteckt werden können, so daß insbesondere auch Leerleitungen vorgesehen werden können, die zum Anschluß zusätzlicher Module vorbereitet sind. Bei einer ringförmigen Netzwerkstruktur ist hingegen eine hohe Anzahl von Leitungsvarianten möglich, die erhöhte Kosten verursacht.

Durch die höhere Flexibilität und die Robustheit im Falle von Leitungsunterbrechungen ist mit einem sternförmigen Netzwerk eine höhere Betriebssicherheit als mit einem ringförmigen Netzwerk erreichbar.

Nachteilig an einem sternförmigen Netzwerk ist es, daß das die Daten tragende Lichtsignal in dem zentralen passiven optischen Knotenelement in eine Vielzahl von Lichtsignalen aufgesplittet wird, von denen jedes zu einem angeschlossenem Modul geführt wird. Durch diese Aufsplittung des Lichtsignals wird die Lichtstärke abhängig von der Anzahl der Module reduziert, so daß ab einer bestimmten Anzahl von Modulen die erforderliche Lichtstärke des Lichtsignals nicht mehr erreicht wird.

Somit ist die Anzahl der über ein passives optisches Knotenelement mit Lichtsignalen versorgbaren Module relativ stark beschränkt (beispielsweise 4 bis maximal 10 Module).

Aufgabe der Erfindung ist es, ein Netzwerk der eingangs genannten Art so auszubilden, daß eine erhöhte Anzahl von Modulen angeschlossen werden kann, wobei die Flexibilität sowie die sonstigen Vorteile eines sternförmigen Netzwerkes erhalten bleiben sollen.

Diese Aufgabe wird bei einem Netzwerk der eingangs genannten Art dadurch gelöst, daß in den Signalwegen zwischen zumindest einem Teil der Sender und dem Knotenelement und/oder zwischen zumindest einem Teil der Empfänger und dem Knotenelement jeweils eine aktive Verstärkungseinheit zum Verstärken der Lichtstärke der optischen Datensignale angeordnet ist.

Durch die Kombination eines sternförmigen Netzwerkes mit einer aktiven Verstärkungseinheit wird erreicht, daß die durch die Splittung des Lichtsignals in dem zentralen passiven Knotenelement reduzierte Lichtstärke so weit angehoben wird, daß auch bei einem Anschluß von 20 Modulen oder mehr das an dem jeweiligen Modul ankommende Lichtsignal eine ausreichende Lichtstärke besitzt. Auf diese Weise können mehr Module als bei bekannten sternförmigen Netzwerken an das zentrale Knotenelement angeschlossen werden, wobei gleichzeitig die Vorteile eines sternförmigen Netzwerkes erhalten bleiben.

Nach einer vorteilhaften Ausführungsform der Erfindung weist die Verstärkungseinheit mehrere optische Ausgänge zum Anschluß je eines Empfängers auf. Dadurch wird erreicht, daß ausgehend von der Verstärkungseinheit eine Vielzahl von Modulen mit Empfängern angeschlossen werden können, so daß nicht nur eine Verlängerung der Lichtleiter, sondern auch eine weitere Verzweigung eines Lichtleiters zu mehreren Modulen möglich ist. Dabei wird durch die erfindungsgemäße aktive Verstärkungseinheit gewährleistet, daß die Lichtstärke der innerhalb der Verstärkungseinheit aufgesplitteten, an den optischen Ausgängen anliegenden Signale ausreichend hoch ist.

Mit einem erfindungsgemäßen Netzwerk werden gegenüber den bekannten sternförmigen Netzwerken noch weitere, neue Vorteile erzielt, da beispielsweise eine bessere Erweiterbarkeit eines solchen Netzwerkes erreicht wird. Da die zentralen Knotenelemente üblicher Netzwerke normalerweise keine Anschlußmöglichkeit für zusätzliche Module besitzen, sondern diese fest mit den Knotenelementen verbunden sind, ist eine Erweiterung eines solchen Netzwerkes nicht oder nur mit hohem Aufwand möglich. Bei einem erfindungsgemäß ausgebildeten Netzwerk kann hingegen ein Modul durch eine erfindungsgemäße Verstärkungseinheit ersetzt werden, an die wiederum eine Vielzahl von weiteren Modulen angeschlossen werden kann. In gleicher Weise wird auch die Reparaturfähigkeit eines erfindungsgemäß ausgebildeten Netzwerkes gegenüber den Netzwerken aus dem Stand der Technik verbessert, da ein defekter Zweig von der Verstärkungseinheit abgeschlossen und durch einen neuen Zweig ersetzt werden kann. Weiterhin ist eine Kaskadierung, d.h. eine Hintereinanderschaltung von mehreren Verstärkungseinheiten möglich, so daß die Anzahl der anschließbaren Module praktisch unbegrenzt ist.

Auch Leitungskupplungen, sogenannten Inline-Kupplungen, können bei einem erfindungsgemäß ausgebildeten Netzwerk verwendet werden, da die durch diese Kupplungen verursachte Dämpfung der Lichtstärke durch die erfindungsgemäßen Verstärkungseinheiten kompensiert wird. Solche Leitungskupplungen können z. B. erforderlich sein, wenn ein Modul in einem sich bewegenden Bauteil, beispielsweise einer Tür eines Kraftfahrzeuges eingebaut ist und beim Bewegen des Bauteil, d. h. beim Öffnen der Tür, der aus zwei Teilelementen bestehende Lichtleiter unterbrochen wird.

Weist die Verstärkungseinheit genau einen optischen Eingang zum Anschluß an das Knotenelement auf, so wird durch die Verstärkungseinheit ein 1-zu-n-Verteiler zum Anschluß von n-Modulen an einen Lichtleiter gebildet.

Nach einer weiteren bevorzugten Ausführungsform der Erfindung weist die Verstärkungseinheit mehrere optische Eingänge zum Anschluß je ei nes Senders auf. Auf diese Weise können beispielsweise Leitungen, die von Modulen in Richtung des zentralen Knotenelements ausgesendete Datensignale führen, zusammengefaßt, verstärkt und über einen gemeinsamen Lichtleiter dem zentralen Knotenelement zugeführt werden. Auf diese Weise können die Anzahl der Leitungen, die bis zu dem zentralen Knotenelement geführt werden müssen, deutlich verringert und somit die gesamte Leitungslänge deutlich verkürzt werden.

Bevorzugt sind jeweils ein Sender und ein Empfänger in einem Modul zusammengefaßt. Dadurch ist gewährleistet, daß eine bidirektionale Kommunikation mit einem solchen Modul möglich ist, wodurch die Flexilität des gesamten Systems weiter erhöht wird.

Nach einer weiteren vorteilhaften Ausführungsform der Erfindung bilden die Verstärkungseinheiten optische Verteiler mit mehreren Ausgängen oder optische Sammeleinheiten mit mehreren Eingängen, wobei jeweils ein Verteiler und eine Sammeleinheit zu einem Verbindungselement zusammengefaßt sind. Derartige Verbindungselemente können zum Anschließen von Modulen mit jeweils einem Sender und einem Empfänger an einen Ausgang und einen Eingang eines zentralen Knotenelements verwendet werden. Das von dem zentralen Knotenelement kommende Licht wird über den Eingang des optischen Verteilers der Verstärkungseinheit aufgenommen und über die Ausgänge des optischen Verteilers an eine Vielzahl von Module weitergeleitet. Das jeweils von den Modulen ausgesandte Licht wird von den Eingängen der Sammeleinheit aufgenommen und zusammengeführt und an den Eingang des zentralen Knotenelements weitergeleitet. Dabei werden die Lichtsignale innerhalb des optischen Verteilers und der optischen Sammeleinheit erfindungsgemäß so verstärkt, daß die Lichtstärke an allen Stellen des Übertragungsweges zwischen den Modulen und dem zentralen Knotenelement ausreichend hoch ist, um von den Modulen ausgewertet werden zu können.

Bevorzugt umfassen die Verstärkungseinheiten jeweils ein optisches Empfangselement, insbesondere eine Empfangsdiode, zum Empfangen und Umwandeln der optischen Datensignale in elektrische Signale sowie ein optisches Sendeelement, insbesondere eine Leuchtdiode, das durch die elektrischen Signale zur Aussendung von Licht ansteuerbar ist, wobei das von dem Sendeelement ausgesandte Lichtsignal bis auf die Lichtstärke mit dem von dem Empfangselement empfangenem Lichtsignal im wesentlichen übereinstimmt und die Lichtstärke des ausgesandten Lichtsignals größer ist als die Lichtstärke des empfangenen Lichtsignals.

Durch die Umwandlung des empfangenen Lichtsignals in elektrische Signale und die Erzeugung von die gleiche Information tragenden neuen Lichtsignalen, kann die Lichtstärke dieser neuen Lichtsignale praktisch beliebig eingestellt werden. Dadurch ist gewährleistet, daß in jedem Fall Lichtsignale mit ausreichend hoher Lichtstärke erzeugbar sind.

Weiterhin ist durch den einfachen Aufbau der Verstärkungseinheiten, ohne komplizierte Steuereinrichtung, eine hohe Betriebssicherheit gewährleistet.

Bevorzugt sind die Datensignale Multimediasignale, insbesondere Audio-, Video- oder Telekommunikationssignale. Es ist grundsätzlich jedoch die Verwendung eines erfindungsgemäßen Netzwerkes mit jeder Art von optischen Signalen möglich. Eine mögliche Anwendung eines erfindungsgemäß ausgebildeten Netzwerkes ist der Einsatz in Kraftfahrzeugen, wobei neben Audio-, Video- und/oder Telekommunikationsdaten auch sonstige Datensignale, beispielsweise Meß- oder Überwachungsdaten über das erfindungsgemäße Netzwerk übertragen werden können. Für die Datenübertragung ist dabei ein geeignetes Datenübertragungsprotokoll erforderlich wie es beispielsweise das von der Anmelderin entwickelte MML-Protokoll (Mobile Media Link Protokoll) darstellt.

Weitere vorteilhafte Ausführungsformen der Erfindung sind in den Unteransprüchen angegeben.

Die Erfindung wird nachfolgend anhand von Ausführungsbeispielen unter Bezugnahme auf die Zeichnungen näher beschrieben; in diesen zeigen:
- Figur 1: ein Netzwerk mit einer sternförmigen Struktur gemäß dem Stand der Technik,
- Figur 2: eine schematische Darstellung eines erfindungsgemäß ausgebildeten Netzwerkes,
- Figur 3: eine weitere schematische Darstellung einer erfindungsgemäß ausgebildeten Ausführungsform,
- Figur 4: eine schematische Schnittdarstellung einer erfindungsgemäß` ausgebildeten Verstärkungseinheit,
- Figur 5: eine weitere Ausführungsform einer erfindungsgemäß ausgebildeten Verstärkungseinheit und
- Figur 6: den Einsatz eines erfindungsgemäßen Netzwerkes in einem Kraftfahrzeug.

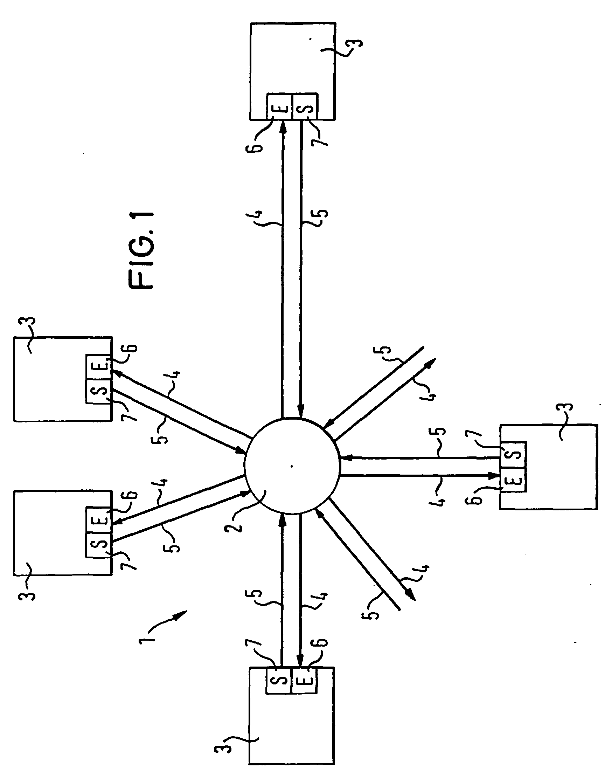

Figur 1 zeigt ein Netzwerk 1 mit einer sternförmigen Struktur, die ein zentrales, passives optisches Knotenelement 2 umfaßt. An dem passiven Knotenelement 2 sind eine Vielzahl von Modulen 3 über Lichtleiter 4, 5 angeschlossen.

Die Module 3 umfassen jeweils einen optischen Empfänger 6 und einen optischen Sender 7, wobei jeweils der optische Empfänger 6 über einen der Lichtleiter 4 von dem zentralen passiven Knotenelement 2 mit Daten versorgt wird, während die optischen Sender 7 jeweils über die Lichtleiter 7 optische Datensignale zu dem Knotenelement 2 übertragen, wie es durch die an den Lichtleitern 4, 5 vorgesehenen Pfeilspitzen angedeutet ist.

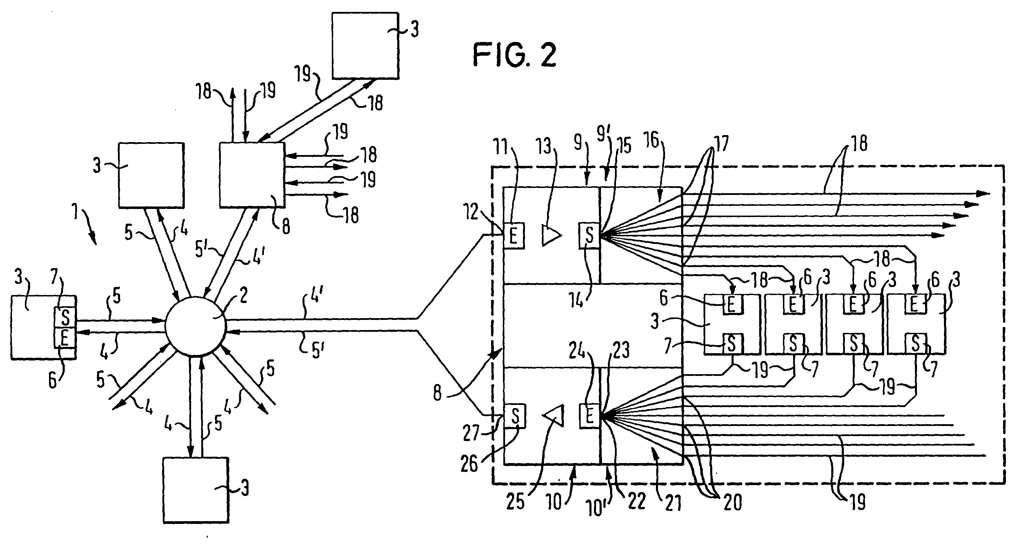

In Figur 2 ist eine Erweiterung des Netzwerkes nach Figur 1 dargestellt. Dabei sind Elemente, die bereits in Figur 1 beschrieben sind, mit den gleichen Bezugszeichen wie in Figur 1 versehen.

Das in Figur 2 dargestellte Netzwerk 1 umfaßt ein zentrales passives optisches Knotenelement 2, das über Lichtleiter 4, 5 mit Empfänger 6 und Sender 7 umfassenden Modulen 3 verbunden ist.

Jeweils zwei der Lichtleiter 4, 5, die in Figur 2 mit 4' und 5' bezeichnet sind, sind anstelle mit Modulen 3 mit Verbindungselementen 8 verbunden.

Die Verbindungselemente 8 umfassen jeweils zwei aktive Verstärkungseinheiten 9, 10, wobei die Verstärkungseinheit 9 einen optischen Verteiler 9' und die Verstärkungseinheit 10 eine optische Sammeleinheit 10' bilden.

Die den optischen Verteiler 9' bildende Verstärkungseinheit 9 umfaßt ein optisches Empfangselement 11 mit einem optischen Eingang 12, an den der Lichtleiter 4' angeschlossen ist. Die von dem optischen Empfangselement 11 aufgenommenen Datensignale werden über einen Verstärkungsabschnitt 13 der Verstärkungseinheit 9 verstärkt und zur Ansteuerung eines optischen Senderelements 14 verwendet.

Das optische Senderelement 14 besitzt einen Ausgang 15, an den ein optisches Verteilerelement 16 mit einer Vielzahl von Ausgängen 17 angeschlossen ist.

Jeder der Ausgänge 17 ist über einen Lichtleiter 18 mit dem Empfänger 6 eines Moduls 3 verbunden.

Die Sender 7 der Module 3 sind über Lichtleiter 19 mit Eingängen 20 eines optischen Sammelelements 21 verbunden. Das optische Sammelelement 21 ist Teil der die optische Sammeleinheit 10' bildenden Verstärkungseinheit 10 und besitzt einen Ausgang 22, der mit einem Eingang 23 eines Empfangselements 24 verbunden ist. Die über das optische Sammelelement 21 dem Empfangselement 24 zugeführten Datensignale werden über einen Verstärkungsabschnitt 25 der Verstärkungseinheit 10 verstärkt und einem Sendeelement 26 zugeführt. Ein Ausgang 27 des Sendeelements 26 ist mit dem Lichtleiter 5' verbunden, so daß das über den Verstärkungsabschnitt 25 verstärkte Datensignal dem zentralen passiven Knotenelement 2 zugeführt wird.

Durch die Verbindungselemente 8 bleibt somit die sternförmige Struktur des Netzwerkes 1 erhalten, da lediglich weitere Verzweigungspunkte, jedoch keine ringförmigen Strukturen in die Netzwerkstruktur eingefügt werden.

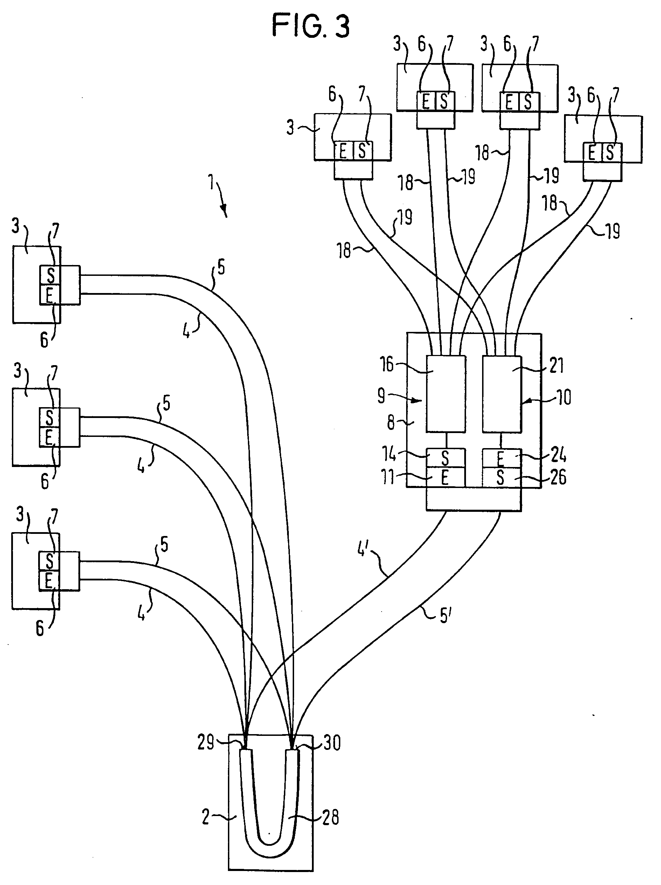

Bei der in Figur 3 dargestellten Ausführungsform ist der Aufbau des zentralen passiven Knotenelements 2 deutlicher zu erkennen. Das Knotenelement 2 besteht aus einer U-förmigen Mischereinheit 28, die beispielsweise als im Spritzgußverfahren hergestelltes, lichtleitendes Kunststoffteil ausgebildet sein kann. Die Stirnseiten der U-förmigen Mischereinheit bilden Lichteintritts- 29 bzw. -austrittsflächen 30, an den die Lichtleiter 4, 4', 5, 5' angeschlossen sind. Von den Sendern 7 ausgesandte optische Datensignale werden somit über die Lichtleiter 5 in die U-förmige Mischereinheit 28 eingespeist, wo sie durch Reflexion an den Innenwänden der Mischereinheit 28 zu der Lichtaustrittsfläche 29 geführt werden. Von der Lichtaustrittsfläche 29 werden die Datensignale dann über den Lichtleiter 4' zu dem Verbindungselement 8 geführt.

Entsprechend werden von dem Verbindungselement 8 über den Lichtleiter 5' ausgesandte Datensignale über die Lichteintrittsfläche 30 in die Mischereinheit 28 eingekoppelt und über die Lichtaustrittsfläche 29 und die Lichtleiter 4 den Empfängern 6 der Module 3 zugeführt.

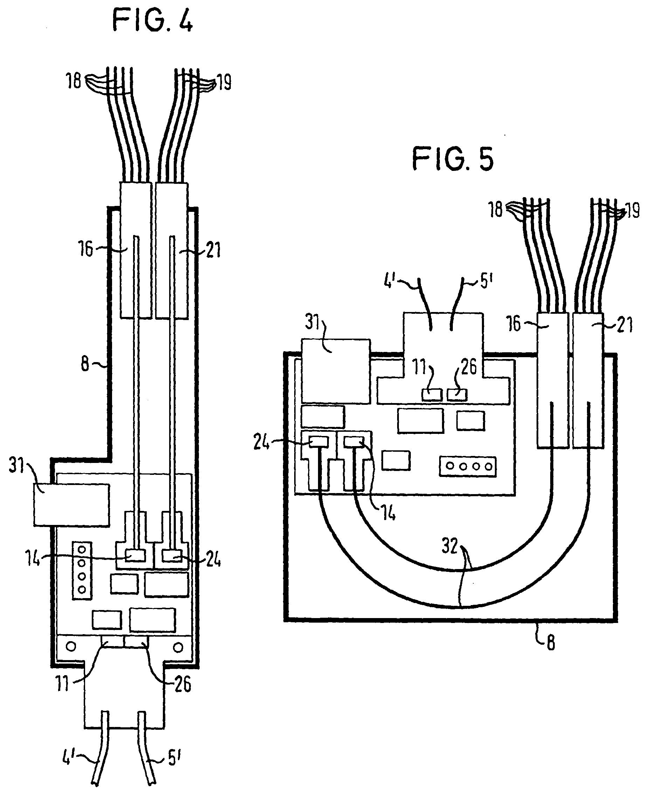

In Figur 4 ist der technische Aufbau eines Verbindungselements 8 näher zu erkennen. Das dem Verbindungselement 8 über den Lichtleiter 4' zugeführte optische Datensignal wird von dem beispielsweise als Empfangsdiode ausgebildeten optischen Empfangselement 11 aufgenommen und in ein elektrisches Signal umgewandelt. Das Verbindungselement 8 ist über einen Anschluß 31 mit einer externen Spannungsversorgung verbunden, über die das als Sendediode ausgebildete optische Sendeelement 14 mit Spannung versorgt wird. Dabei wird die an dem optischen Sendeelement 14 anliegende Spannung durch die von dem Empfangselement 11 erzeugte Spannung gesteuert, so daß die von dem Sendeelement 14 ausgesandten Lichtsignale in ihrer Abfolge den von dem Empfangselement 11 aufgenommenen Lichtsignalen entsprechen.

Durch die Versorgung des Sendeelements 14 mit einer externen Spannung ist gewährleistet, daß auch geringe Pegel der von dem Empfangselement 11 erzeugten Ausgangsspannung in definierte, hohe optische Sendepegel des Sendeelements 14 umgesetzt werden.

Entsprechend werden von dem optischen Empfangselement 24, das ebenfalls als Empfangsdiode ausgebildet sein kann, über die Lichtleiter 19 aufgenommene optische Datensignale in elektrische Signale umgewandelt, woraufhin diese elektrischen Signale zur Ansteuerung des als Sendediode ausgebildeten optischen Sendeelements 26 verwendet werden. Auch hier ist durch die Zufuhr einer externen Spannung gewährleistet, daß die von dem optischen Sendeelement 26 ausgesandten Lichtsignale eine vorgegebene Mindestlichtstärke besitzen.

Das in Figur 5 dargestellte Ausführungsbeispiel eines Verbindungselementes 8 ist entsprechend dem Ausführungsbeispiel gemäß Figur 4 ausgebildet, wobei lediglich die optischen Verbindungselemente 32 zwischen den Lichtleitern 18, 19 und dem Empfangselement 24 und dem Sendeelement 14 halbkreisförmig verlaufend angeordnet sind. Auf diese Weise wird erreicht, daß alle Anschlüsse des Verbindungselementes 8 auf einer Seite angeordnet werden können, wodurch eine besonders kompakte Bauweise erreicht wird.

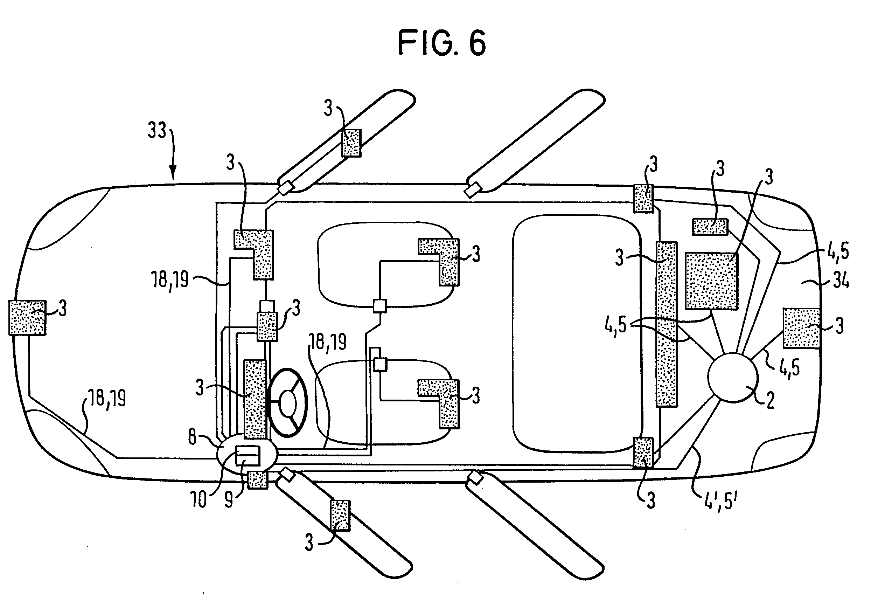

Figur 6 zeigt ein typisches Anwendungsbeispiel für ein erfindungsgemäß ausgebildetes Netzwerk. In Figur 6 ist eine schematische Draufsicht auf ein Kraftfahrzeug 33 dargestellt, wobei schematisch eine Vielzahl von Modulen 3 als graue Bereiche angedeutet sind. Diese Module 3 können beispielsweise Videokameras, Monitore, Audiogeräte wie beispielsweise Radio, CD-Spieler, Verstärker, Lautsprecher oder dergleichen, sowie Sprachsignalaufnehmer, Telefone oder sonstige Audio-, Video- oder Telekommunikationsgeräte sein.

Wie Figur 6 zu entnehmen ist, ist beispielsweise im Kofferraum 34 des Kraftfahrzeuges 33 ein zentrales passives optisches Knotenelement 2 vorgesehen, das über Lichtleiter 4, 5 mit einem Teil der Module 3 verbunden ist. Da die Entfernung von dem im Heckbereich des Kraftfahrzeugs 33 angeordneten Knotenelement 2 zu dem vorderen Bereich des Kraftfahrzeuges 33 so groß ist, daß über einen entsprechend langen Lichtleiter ausgesandte Lichtsignale von den Modulen 3 nicht mehr einwandfrei verarbeitet werden könnten, ist im vorderen Bereich des Kraftfahrzeuges 33 ein schematisch dargestelltes Verbindungselement 8 vorgesehen, das aus zwei aktiven Verstärkungselementen 9, 10 besteht und mit dem zentralen passiven Knotenelement 2 über Lichtleiter 4', 5' verbunden ist.

Das Verbindungselement 8 ist mit den im vorderen Bereich des Kraftfahrzeuges 33 angeordneten Modulen 3 über weitere Lichtleiter 18, 19 verbunden, so daß die Module 3 im vorderen Bereich des Kraftfahrzeuges 33 mit Datensignalen angesteuert werden, die eine ausreichende Lichtstärke besitzen.

Die erfindungsgemäße Verknüpfung eines zentralen passiven optischen Knotenelements mit aktiven Verstärkungselementen, führt dazu, daß die sternförmige Struktur des Netzwerkes und damit die Ausbildung als Bussystem, in dem zu jedem Zeitpunkt jedes Modul senden und empfangen kann und somit zu jedem Zeitpunkt jedes Modul mit einem anderen Modul kommunizieren kann, erhalten bleibt. Solange für die Datenübertragung ein entsprechendes Übertragungsprotokoll verwendet wird, können über das erfindungsgemäße Bussystem beliebige digitale Daten gesendet werden.

Gegenüber Netzwerken mit ringförmiger Struktur besitzt ein erfindungsgemäß ausgebildetes Netzwerk mehrere Vorteile. Zum einen ist ein erfindungsgemäßes Netzwerk wesentlich zuverlässiger und unanfälliger gegen Störungen, da bei einer Unterbrechung eines Lichtleiters das restliche Netzwerk voll funktionsfähig bleibt. Zum anderen ist ein erfindungsgemäß ausgebildetes Netzwerk deutlich flexibler einsetzbar, da beispielsweise Leerleitungen vorgesehen werden können, an die bei Bedarf entsprechende Module anschließbar sind.

Gegenüber einem bekannten Netzwerk mit sternförmiger Struktur hat ein erfindungsgemäß ausgebildetes Netzwerk den Vorteil, daß Leitungslängen verkürzt werden können, da nicht von jedem Modul aus eine vollständige Leitung bis zu dem zentralen Knotenelement geführt werden müssen. Weiterhin können aufgrund der aktiven Verstärkungselemente praktisch beliebig viele Module in dem Netzwerk eingesetzt werden, da durch die aktiven Verstärkungselemente auch bei großen Leitungslängen die erforderliche Lichtstärke der optischen Datensignale gewährleistet werden kann.

### Bezugszeichenliste

- 1: Netzwerk
- 2: zentrales passives optisches Knotenelement
- 3: Modul
- 4: Lichtleiter
- 5: Lichtleiter
- 6: optischer Empfänger
- 7: optischer Sender
- 8: Verbindungselement
- 9: aktive Verstärkungseinheit
- 9': optischer Verteiler
- 10: aktive Verstärkungseinheit
- 10': optische Sammeleinheit
- 11: optisches Empfangselement
- 12: optischer Eingang
- 13: Verstärkungsabschnitt
- 14: optisches Sendeelement
- 15: Ausgang des Sendeelements 14
- 16: Verteilerelement
- 17: Ausgang des Verteilerelements
- 18: Lichtleiter
- 19: Lichtleiter
- 20: Eingang des optischen Sendeelements 21
- 21: optisches Sendeelement
- 22: Ausgang des optischen Sendeelements 21
- 23: Eingang des Empfangselements
- 24: Empfangselement
- 25: Verstärkungsabschnitt
- 26: Sendeelement
- 27: Ausgang
- 28: Mischereinheit
- 29: Austrittsfläche der Mischereinheit
- 30: Eintrittsfläche der Mischereinheit
- 31: Ânschluß
- 32: optisches Verbindungselement
- 33: Kraftfahrzeug
- 34: Kofferraum

## Patentansprüche

1. Netzwerk zur Übertragung von insbesondere digitalen optischen Datensignalen mit mehreren die optischen Datensignale aussendenden Sendern (7, 14, 26) und mehreren zum Empfang der optischen Datensignale ausgebildeten Empfängern (6, 11, 24), wobei das Netzwerk eine sternförmige Struktur aufweist und die Sender (7, 14, 16) und Empfänger (6, 11, 24) jeweils über Lichtleiter (4, 4', 5, 5', 18, 19), insbesondere über Plastik- oder Glasfaserkabel, mit einem zentralen passiven optischen Knotenelement (2) zum Empfangen und Weiterleiten der optischen Datensignale verbunden sind,
**dadurch gekennzeichnet,**
daß in den Signalwegen zwischen zumindest einem Teil der Sender (7) und dem Knotenelement (2) und/oder zwischen zumindest einem Teil der Empfänger (6) und dem Knotenelement (2) jeweils eine aktive Verstärkungseinheit (9, 10) zum Verstärken der Lichtstärke der optischen Datensignale angeordnet ist.

2. Netzwerk nach Anspruch 1,
**dadurch gekennzeichnet,**
daß die Verstärkungseinheit (9) mehrere optische Ausgänge (17) zum Anschluß je eines Empfängers (6) aufweist.

3. Netzwerk nach Anspruch 2,
**dadurch gekennzeichnet,**
daß die Verstärkungseinheit (9) genau einen optischen Eingang (12) zum Anschluß an das Knotenelement (2) aufweist.

4. Netzwerk nach Anspruch 1 oder 2,
**dadurch gekennzeichnet,**
daß die Verstärkungseinheit (10) mehrere optische Eingänge (20) zum Anschluß je eines Senders (7) aufweist.

5. Netzwerk nach Anspruch 4,
**dadurch gekennzeichnet,**
daß die Verstärkungseinheit (10) genau einen optischen Ausgang (27) zum Anschluß an das Knotenelement (2) aufweist.

6. Netzwerk nach einem der vorhergehenden Ansprüche,
**dadurch gekennzeichnet,**
daß jeweils ein Sender (7) und ein Empfänger (6) in einem Modul (3) zusammengefaßt sind.

7. Netzwerk nach einem der vorhergehenden Ansprüche,
**dadurch gekennzeichnet,**
daß die Verstärkungseinheiten (9, 10) optische Verteiler (9') mit mehreren Ausgängen (17) oder optische Sammeleinheiten (10') mit mehreren Eingängen (20) bilden und jeweils ein Verteiler (9') und eine Sammeleinheit (10') zu einem Verbindungselement (8) zusammengefaßt sind.

8. Netzwerk nach einem der vorhergehenden Ansprüche,
**dadurch gekennzeichnet,**
daß die Verstärkungseinheiten (9, 10) jeweils ein optisches Empfangselement (11, 24), insbesondere eine Empfangsdiode, zum Empfangen und Umwandeln der optischen Datensignale in elektrische Signale sowie ein optisches Sendeelement (14, 26), insbesondere eine Leuchtdiode, umfassen, das durch die elektrischen Signale zur Aussendung von Licht ansteuerbar ist, wobei das von dem Sendeelement (14, 26) ausgesandte Lichtsignal bis auf die Lichtstärke mit dem von dem Empfangselement (11, 24) empfangenen Lichtsignal im wesentlichen übereinstimmt und die Lichtstärke des ausgesandten Lichtsignals größer ist als die Lichtstärke des empfangenen Lichtsignals.

9. Netzwerk nach Anspruch 8,
**dadurch gekennzeichnet,**
daß an dem Ausgang des Sendeelements (14) ein optisches Verteilerelement (16) mit mehreren Ausgängen (17) angeschlossen ist.

10. Netzwerk nach Anspruch 8 oder 9,
**dadurch gekennzeichnet,**
daß an dem Eingang des Empfangselements (24) ein optisches Sammelelement (21) mit mehreren Eingängen (20) angeschlossen ist.

11. Netzwerk nach einem der vorhergehenden Ansprüche,
**dadurch gekennzeichnet,**
daß mehrere Knotenelemente vorgesehen sind.

12. Netzwerk nach einem der vorhergehenden Ansprüche,
**dadurch gekennzeichnet,**
daß die Datensignale Multimediasignale, insbesondere Audio-, Video- und/oder Telekommunikationssignale sind.

13. Optisches Verbindungselement (8) mit einem optischen Verteiler (9') mit mehreren Ausgängen (17) und einer optischen Sammeleinheit (10') mit mehreren Eingängen (20), wobei der Verteiler (9') und die Sammeleinheit (10') jeweils als Verstärkungseinheiten (9, 10) mit den die Verstärkungseinheiten (9, 10) betreffenden Merkmale der vorhergehenden Ansprüche ausgebildet sind.

14. Verwendung eines Netzwerks (1) nach einem der Ansprüche 1 bis 12 und/oder eines optischen Verbindungselements (8) nach Anspruch 13 in einem Kraftfahrzeug (33).
